**Europäisches Patentamt**

**European Patent Office**

**Office européen des brevets**

(11) Veröffentlichungsnummer: **0 109 971**
**A1**

(12) **EUROPÄISCHE PATENTANMELDUNG**

(21) Anmeldenummer: **82111021.0**

(22) Anmeldetag: **29.11.82**

(51) Int. Cl.³: **G 06 K 19/02,** G 06 K 19/08

---

(43) Veröffentlichungstag der Anmeldung: **13.06.84**
**Patentblatt 84/24**

(84) Benannte Vertragsstaaten: **AT CH FR IT LI**

(71) Anmelder: **Kunz KG, Voltagasse 40/1, A-1210 Wien (AT)**

(72) Erfinder: **Wallerstorfer, Kurt, Elsa-Brändströmstrasse 4, A-5020 Salzburg (AT)**
Erfinder: **Dorner, Walter, Woltergasse 40/1, A-1210 Wien (AT)**

(74) Vertreter: **Berngruber, Otto, Dr. Dipl.-Chem., Patentanwälte Haft, Berngruber, Czybulka Hans-Sachs-Strasse 5, D-8000 München 5 (DE)**

---

(54) **Verfahren zur Herstellung einer Berechtigungskarte mit einer magnetisierbaren Schicht.**

(57) Berechtigungskarten, die mittels eines Hall-Generators abgelesen werden und deshalb eine Magnetschicht mit starkem Magnetfeld bzw. relativ großer Schichtdicke besitzen müssen, werden durch Bedrucken mit einer magnetisierbaren Dispersion nach Art des Siebdrucks hergestellt.

EP 0 109 971 A1

0109971

Die Erfindung bezieht sich auf ein Verfahren zur Herstellung einer Berechtigungskarte, die auf einem Träger eine magnetisierbare Schicht aufweist, von der magnetisch aufgezeichnete Daten mittels einer Lesevorrichtung mit einem Hall-Generator ablesbar sind.

Die auf die magnetisierbare Schicht einer Berechtigungskarte aufgebrachten Daten können entweder induktiv oder mit Hilfe eines Hall-Generators gelesen werden. Beim induktiven Ablesen ist eine Schichtdicke der magnetisierbaren Schicht von einigen µm ausreichend. Eine derart dünne Schicht ist beispielsweise durch Bestreichen des Trägers mit magnetischer Tinte herstellbar (DE-OS 27 48 574).

Nachteilig beim induktiven Ablesen ist jedoch, daß zwischen Magnetschicht und Lesekopf nur ein sehr minimaler Luftspalt vorliegen darf. Verschmutzungen und Knicke beeinträchtigen den Lesevorgang, so daß derartige Karten sehr empfindlich gegenüber Umwelteinflüssen, wie Schmutz, Eis, mechanische Deformierung oder sonstige Beschädigungen sind.

Beim Ablesen mittels eines Hall-Generators treten diese Nachteile nicht auf, d. h. es kann ein erheblich größerer Luftspalt zwischen der Magnetschicht und dem Lesekopf vorliegen, so daß beispielsweise auch verschmutzte und vereiste Karten ohne Schwierigkeiten abgelesen werden können. Infolgedessen werden Hall-Generatoren insbesondere beim Ablesen von Skilift-Karten eingesetzt.

Jedoch benötigt ein Hall-Generator ein stärkeres Magnetfeld als ein induktiver Lesekopf, so daß mit einem Hall-Generator ablesbare Berechtigungskarten eine Magnetschicht mit einer Schichtdicke erfordern, die ein Vielfaches derjenigen induktiv ablesbarer Karten beträgt, nämlich 50 µm und mehr. Aus diesem Grunde sind in mit Hall-Generatoren ablesbaren Berechtigungskarten z. B. Magnetplatten eingeschweißt worden (DE-OS 27 47 585).

Zum Auftragen der magnetisierbaren Schicht ist bei Magnetbändern der Einsatz von Gieß-, Extrudier- und Tiefdruckverfahren bekannt. So geht beispielsweise ein Extrudierverfahren aus der DE-AS 19 07 212 und ein Tiefdruckverfahren aus der DE-AS 16 71 572, der DE-AS 25 54 318 sowie der DE-PS 917 875 hervor. Die Schichtdicke der magnetischen Schicht wird in der DE-AS 19 07 212 mit zwei bis drei μm angegeben und in der DE-AS 16 71 572 mit fünf μm und in der DE-AS 25 54 318 mit elf μm , was zum induktiven Ablesen auch ausreicht. Um aber Schichtdicken von 50 μm und mehr hervorzubringen, wie sie zum Ablesen mittels Hall-Generatoren erforderlich sind, ist es notwendig, diese bekannten Verfahren derart häufig zu wiederholen, daß die danach hergestellten Berechtigungskarten sehr kostspielig werden. (Nach der DE-PS 917 875 ist sogar die dünne induktiv ablesbare Schicht im Tiefdruckverfahren nur durch mehrmaliges Aufdrucken herstellbar). Die s gilt auch für die mit einem Magnetband versehene mittels Hall-Generatoren ablesbare Berechtigungskarte nach der DE-OS 30 01 888. Dabei ist zu bedenken, daß bei massenhaft hergestellten Karten, beispielsweise Skilift-Karten, von denen je Ski-Saison in den Alpenländern an die hundert Millionen benötigt werden, der Preis je Karte von ganz erheblicher Bedeutung ist.

Bei dem Extrudierverfahren kann dabei die Schichtdicke auch nicht durch eine höherviskose magnetisierbare Dispersion wesentlich gesteigert werden, weil dann eine magnetisierbare Schicht mit ungleichmäßiger Schichtdicke erhalten wird. Auch sind dem Tiefdruckverfahren hinsichtlich der mit einem Druckvorgang erzielbaren Schichtdicke dadurch Grenzen gesetzt, daß bei zu großer Viskosität der magnetisierbaren Dispersion und/oder zu großer Tiefe der Vertiefungen der Druckform die magnetische Dispersion in den Vertiefungen nicht mehr vollständig an den Träger abgegeben wird.

Der Erfindung , wie sie in den Ansprüchen gekennzeichnet ist, liegt daher die Aufgabe zugrunde, ein Verfahren anzugeben, mit dem die erforderliche Dicke der mittels Hall-Generatoren ablesbaren Schicht mit einer geringen Zahl von Auftragsvorgängen, möglichst mit einem Auftragsvorgang erreicht wird.

Mit dem erfindungsgemäßen Verfahren sind Schichtdicken der Magnetschicht von 50 µm und mehr mit einem einzigen Druckvorgang herstellbar. Falls noch dickere Magnetschichten erwünscht sind, z.B. um die Karte gegen magnetische Fremdeinflüsse unempfindlicher zu machen, können beide Seiten der Karte bzw. des Trägers mit einer Magnetschicht mittels Siebdruck versehen werden.

Als magnetische Dispersionen können tiefdruckfähige magnetisierbare Dispersionen verwendet werden, wie sie beispielsweise in der DE-AS 16 71 572 beschrieben bzw. im Handel erhältlich sind. Derartige Dispersionen werden auch als Magnetfarben bezeichnet. Ein relativ grobes Sieb mit einer Maschenzahl von weniger als 50, vorzugsweise weniger als 30 Maschen/cm$^2$ führt zu besonders guten Ergebnissen, desgleichen ein Rakel, dessen Kante gegenüber einem herkömmlichen Tiefdruckrakel durch Abschleifen stärker abgerundet ist.

Vorteilhafterweise wird nach dem erfindungsgemäßen Verfahren die Karte über ihre volle Fläche mit einer magnetisierbaren Schicht versehen. Dadurch ist eine hohe Bit-Anzahl gegenüber einer lediglich eine Magnetspur aufweisenden Karte erreichbar. Auch weist eine über die volle Fläche mit einer magnetisierbaren Schicht versehene Karte eine ebene Oberfläche auf, d.h. es liegen keine Kanten vor, wie sie durch die Längskanten einer Magnetspur auftreten. Durch diese Kanten können sich nämliche Probleme beim Aufdrucken der sichtbaren Daten z.B. mittels Offset-Druck dadurch ergeben, daß im Bereich der Kanten der Magnetspur kein Kontakt der Druckwalze mit der Karte zustandekommt.

Bevorzugt wird ein in üblicher Weise in einen Rahmen eingespanntes Sieb verwendet, wobei der Schichtträger in Form eines Bogens eingesetzt wird, z.B. mit einer Größe von 1 x 1,3 m, so daß aus ihm 100 Karten und mehr ausgestanzt werden können.

Das Ausstanzen erfolgt vorteilhafterweise erst nach dem Bedrucken des Bogens mit sichtbarer Farbe, z. B. nach dem Offset-Verfahren , da auf diese Weise ein vollflächiger Farbdruck mit einem einzigen Druckvorgang für eine Vielzahl von Karten durchgeführt werden kann, d.h. die Produktionszeit je Karte wird erheblich herabgesetzt.

Weiterhin kann ein Sieb mit Bereichen verwendet werden, die für die magnetisierbare Dispersion undurchlässig sind, so daß auf der Karte Bereiche entstehen, die keine Magnetschicht aufweisen.

Dadurch wird eine unzulässige Magnetisierung der magnetisierbaren Schicht erschwert, d.h. die Fälschungssicherheit der Karte kann erhöht werden. Auch können durch ein solches undurchlässige Bereiche aufweisendes Sieb alternierend Magnetschichtbereiche und magnetschichtfreie Bereiche auf der Karte erzeugt werden, so daß mittels des Hall-Generatorlesekopfs eine genaue Positionierung der Karte möglich ist, um dieselbe z.B. sichtbar zu entwerten, etwa durch Ausstanzen eines Lochs.

Weiterhin können mit einem undurchlässige Bereiche aufweisenden Sieb nur diejenigen Bereiche des Trägers bedruckt werden, auf die magnetische Daten aufgezeichnet werden sollen, d.h. die für die Codierung tatsächlich notwendig sind. Durch z.B. punktförmige Bereiche für die einzelnen Bits wird eine gegenseitige magnetische Beeinflussung benachbarter Breiche weitgehend ausgeschaltet. Auch kann dadurch der Verbrauch an magnetisierbarer Dispersion drastisch gesenkt werden.

Bei der Herstellung der Berechtigungskarte nach dem erfindungsgemäßen Verfahren wird vorzugsweise wie folgt vorgegangen:

Mittels des im Rahmen aufgespannten Siebs wird ein Bogen von z.B. 1 x 1,30 m einer Trägerfolie mit magnetisierbarer Dispersion z-nächst auf der einen und dann auf der anderen Seite bedruckt, wodurch auf jeder Seite der Trägerfolie eine magnetisierbare Schicht mit einer Schichtdicke von z.B. 50 µm erzeugt wird.

Der so hergestellte Rohling wird mit Papier beidseitig kaschiert. Die Vorderseite des papierkaschierten Bogens wird dann in einem Druckvorgang mit den gewünschten sichtbaren Daten bedruckt, z.B. Name des Skilifts, Skigebiet, Art der Karte, wie X Tage-Skipass, Erwachsener usw., desgleichen die Rückseite z.B. mit Werbeangaben. Alsdann wird eine durchsichtige Folie zum Schutz des sichtbaren Aufdrucks aufgebracht, worauf schließlich die einzelnen Berechtigungskarten aus dem so erhaltenen Bogen aufgestanzt werden.

Ski-Data Computer-Handelsgesellschaft m.b.H.
St. Leonhard bei Grödig, Österreich

Verfahren zur Herstellung einer Berechtigungskarte mit einer
magnetisierbaren Schicht

P a t e n t a n s p r ü c h e

1. Verfahren zur Herstellung einer Berechtigungskarte, die auf einem Träger eine magnetisierbare Schicht aufweist, von der magnetisch aufgezeichnete Daten mittels einer Lesevorrichtung mit einem Hall-Generator ablesbar sind, dadurch g e k e n n - z e i c h n e t , daß die magnetisierbare Schicht durch Bedrucken des Trägers mit einer magnetisierbaren Dispersion nach Art des Siebdrucks aufgebracht wird.

2. Verfahren nach Anspruch 1, dadurch gekennzeichnet, daß der Träger auf beiden Seiten mit magnetisierbarer Dispersion bedruckt wird.

3. Verfahren nach Anspruch 1 oder 2, dadurch gekennzeichnet, daß das Bedrucken über die volle Fläche des Trägers erfolgt.

4. Verfahren nach einem der Ansprüche 1 bis 3, dadurch gekennzeichnet, daß nur der bzw. diejenigen Bereiche des Trägers bedruckt werden, auf die magnetische Daten aufgezeichnet werden sollen.

5. Verfahren nach einem der Ansprüche 1 bis 4, dadurch gekennzeichnet, daß das Bedrucken mit einem Sieb mit einer Maschenzahl von weniger als 50, vorzugsweise weniger als 30 Maschen/cm$^2$ durchgeführt wird.

6. Verfahren nach einem der vorstehenden Ansprüche, dadurch gekennzeichnet, daß ein Rakel verwendet wird, dessen Kante gegenüber einem herkömmlichen Siebdruckrakel stärker abgerundet ist.

7. Verfahren nach einem der vorstehenden Ansprüche, dadurch gekennzeichnet, daß der Träger beim Bedrucken mit der magnetisierbaren Dispersion in Form eines Bogens vorliegt, dessen Länge und Breite ein Vielfaches der Länge und Breite der herzustellenden Berechtigungskarte beträgt.

8. Verfahren nach einem der vorstehenden Ansprüche, dadurch gekennzeichnet, daß der Träger bzw. Bogen nach dem Bedrucken mit der magnetisierbaren Dispersion auf beiden Seiten mit Papier kaschiert wird.

9. Verfahren nach Anspruch 7 oder 8, dadurch gekennzeichnet, daß das aufkaschierte Papier durch einen einzigen Druckvorgang mit den sichtbaren Daten der Berechtigungskarte versehen wird, ggf. eine durchsichtige Schutzfolie aufgebracht wird, und danach aus dem so erhaltenen Bogen die einzelnen Berechtigungskarten gestanzt oder geschnitten werden.

Europäisches
Patentamt

**EUROPÄISCHER RECHERCHENBERICHT**

0109971

Nummer der Anmeldung

EP 82 11 1021

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-4 100 011 (FOOTE)<br><br>* Spalte 3, Zeilen 13-21; Spalte 5, Zeilen 5-14; Anspruch 3 *<br><br>--- | 1,3,5 7,9 | G 06 K 19/02<br>G 06 K 19/08 |
| X | CH-A- 420 690 (PLESSEY-UK LTD.)<br>* Seite 2, Zeilen 15-55; Seite 3, Zeilen 22-37 *<br><br>--- | 1,4,7 | |
| A | DE-A-2 305 165 (TRANSACTION TECHNOLOGY)<br>* Figur 6; Seite 5; Seite 13 *<br><br>--- | 1,4,7 9 | |
| A | US-A-3 808 404 (RIGGS)<br><br>--- | 1,3,4 | |
| A | US-A-3 644 716 (MASANORI NAGATA)<br><br>--- | 1,3 | **RECHERCHIERTE SACHGEBIETE (Int. Cl. ³)** |
| A | FR-A-2 139 347 (MATSUMOTO)<br><br>----- | 1,3 | G 06 K 19/02<br>G 06 K 19/08 |

Der vorliegende Recherchenbericht wurde für alle Patentansprüche erstellt.

| Recherchenort<br>DEN HAAG | Abschlußdatum der Recherche<br>01-08-1983 | Prüfer<br>PESCHEL W. |
|---|---|---|